# EUROPÄISCHE PATENTSCHRIFT

(11) **EP 2 783 143 B1**
(45) Veröffentlichungstag und Bekanntmachung des Hinweises auf die Patenterteilung: **31.01.2018**
(21) Anmeldenummer: 12769378.6
(22) Anmeldetag: 27.09.2012
(51) Int. Cl.: F16K 99/00, B01L 3/00

(54) **MIKROFLUIDISCHE MEMBRANVENTILVORRICHTUNG UND ENTSPRECHENDES HERSTELLUNGSVERFAHREN**
MICROFLUIDIC MEMBRANE-VALVE DEVICE, AND A CORRESPONDING PRODUCTION METHOD
DISPOSITIF MICROFLUIDIQUE À SOUPAPE À MEMBRANE ET PROCÉDÉ DE FABRICATION CORRESPONDANT

(30) Priorität: 22.11.2011 DE 102011086856
(43) Veröffentlichungstag der Anmeldung: 01.10.2014
(73) Patentinhaber: Robert Bosch GmbH, 70442 Stuttgart (DE)
(72) Erfinder: BRETTSCHNEIDER, Thomas, 70806 Kornwestheim (DE); DORRER, Christian, 70193 Stuttgart (DE)
(86) Internationale Anmeldenummer: PCT/EP2012/069091
(87) Internationale Veröffentlichungsnummer: WO 2013/075871

(56) Entgegenhaltungen:
- GB-A- 2 467 298
- US-A1- 2002 124 879
- US-A1- 2006 180 223
- US-A1- 2010 276 005
- US-B1- 6 527 003
- GUERIN L J ET AL: "Miniature one-shot valve", MICRO ELECTRO MECHANICAL SYSTEMS, 1998. MEMS 98. PROCEEDINGS., THE ELE VENTH ANNUAL INTERNATIONAL WORKSHOP ON HEIDELBERG, GERMANY 25-29 JAN. 1998, NEW YORK, NY, USA,IEEE, US, 25. Januar 1998 (1998-01-25), Seiten 425-428, XP010270255, DOI: 10.1109/MEMSYS.1998.659794 ISBN: 978-0-7803-4412-9

## Beschreibung

Die vorliegende Erfindung betrifft eine mikrofluidische Membranventilvorrichtung Eine Membranventilvorrichtung gemäß des Oberbegriffes des Anspruchs 1 ist bereits aus der US 6 527 003 B1 bekannt. Ferner betrifft die vorliegende Erfindung ein entsprechendes Herstellungsverfahren.

Aus Guerin, L.J. et al.; "Miniature one-shot valve", Mircro electro technical systems, 1998. Mems 98. Proceedings., The eleventh annual international workshop on Heidelberg, Germany 25 - 29 Jan. 1998, New York, NY USA. IEEE, US 25. Januar 1998 (1998-01-25), Seiten 425 - 428, XP010270255 ist ein mikrofluidisches Membranventil bekannt, bei dem auf einem Glassubstrat in der Peripherie eines Durchgangslochs eine Heizseinrichtung vorgesehen ist. Über der Heizungseinrichtung ist ein dünner PE-PET-Membranfilm laminiert wobei in der oberen Membranschicht eine Ventilkappe strukturiert ist.

Zur Kontrolle mikrofluidischer Abläufe in einem Lab-on-a-Chip(LoC)-System, insbesondere in einem polymeren LoC, sind mikrofluidische Ventile zum Öffnen und Schließen von mikrofluidischen Kanälen erforderlich. Diese Ventile ermöglichen beispielsweise das kontrollierte Zusammenführen mehrerer Flüssigkeiten, das gezielte Entleeren von Reservoiren oder das Pumpen von Flüssigkeiten usw..

Neben beliebig oft schaltbaren Drehventilen und Membranventilen, wie z.B. aus der DE 10 2008 002 675 A1 und der DE 10 2008 002 336 A1 bekannt, sind auch Einmalventile bekannt, welche nur ein einziges Mal schaltbar sind. Es wurden Ausführungstypen beschrieben, welche normalerweise offen oder normalerweise geschlossen sind.

In Liu et al., Single-use, thermally actuated paraffin valves for microfluidic applications, Sensors and Actuators B: Chemical, Vol. 98, Seiten 328 bis 336, werden Einmalventile bestehend aus Paraffinwachs beschrieben. Das Paraffinwachs wird durch lokales Erhöhen der Temperatur verflüssigt und gibt dadurch einen blockierten Kanal für das Fluid frei.

In Selvaganapathy, Carlen, Mastrangelo, Electrothermally actuated inline microfluidic valve, Sensors and Actuators A 104 (2003), Seiten 275 bis 282, wird ebenfalls eine Vorrichtung beschrieben, welche Paraffinwachs verwendet, um einen ursprünglich offenen Kanal zu verschließen. Hierzu wird das Paraffinwachs oberhalb eines Kanalstücks auf solche Art und Weise angeordnet, dass der Kanal durch die thermische Ausdehnung des Paraffinwachses verschlossen wird. Die dazu benötigte thermische Energie wird über benachbarte Heizelemente zugeführt.

In Li et al., A parylene MEMS electrothermal valve, Journal of Microelectromechanical Systems, Vol. 18, Seiten 1184 bis 1197, 2009, wird ein Ventil beschrieben, welches eine Parylene-Membran durch lokales Erhitzen einer Metallschicht zerstört und damit einen blockierten Kanal freigibt.

Die US 2010/0180953 A1 beschreibt ein thermisch induzierbares Halbleiter-Einmalventil, das einen Siliziumwafer mit einer Kavität aufweist, über der eine thermisch deformierbare Membran aus Siliziumnitrid aufgehängt ist. Ein Widerstandselement ist auf der Membran strukturiert, welches unter Anlegen von Spannung eine mechanische Deformation der Membran bewirken kann, um einen Durchgang zu schaffen. Zur Herstellung dieses bekannten Ventils sind Reinraumbedingungen unerlässlich.

### Offenbarung der Erfindung

Die Erfindung schafft eine mikrofluidische Membranventilvorrichtung mit den Merkmalen des Anspruchs 1 und ein entsprechendes Herstellungsverfahren nach Anspruch 8.

Die vorliegende Erfindung ermöglicht es, mikrofluidische Kanäle in einem einmaligen Vorgang, ausgelöst durch eine elektrische Aktuierung, zu öffnen und/oder zu verschließen und damit als Ventil zu wirken. Es sind dabei sowohl normalerweise offene als auch normalerweise geschlossene Ventile auf der gleichen einfachen Plattform realisierbar.

Die der vorliegenden Erfindung zugrunde liegende Idee besteht aus einem Schichtaufbau mit einem ersten Polymersubstrat mit einem ersten mikrofluidischen Kanal, gedeckelt von einer flexiblen Polymermembran, welche den ersten mikrofluidischen Kanal dicht verschließt. In Kontakt mit der Polymermembran befindet sich eine Heizeinrichtung, beispielsweise eine strukturierte Metallschicht, welche an der fluidisch blockierten Stelle eine hochohmige Struktur bildet und über elektrische Anschlüsse mit der Außenseite verbunden ist. Dieser Schichtaufbau wird mit einem zweiten Polymersubstrat, welches einen zweiten fluidischen Kanal aufweist, derart verbunden, dass der zweite fluidische Kanal des zweiten Polymersubstrats den blockierten ersten fluidischen Kanal des ersten Polymersubstrats über den blockierten Bereich fortführt.

Durch Anlegen einer elektrischen Spannung an die nach außen geführten Anschlüsse kann gezielt der hochohmige Bereich erhitzt werden und so die Polymermembran durchschmolzen und damit die Blockade zwischen den beiden mikrofluidischen Kanälen entfernt werden, so dass diese einen einzigen freigegebenen durchgehenden fluidischen Kanal bilden.

Mithilfe der Polymermembran kann in einer Weiterbildung ein Membranventil realisiert werden, bei dem ein Steuerkanal durch den erfindungsgemäßen Aufbau blockiert wird. Bei Bereitstellung eines entsprechenden Drucks ist damit ein einmaliges elektrisch ausgelöstes Schließen (Zuführen des Überdrucks) oder Öffnen (Öffnen eines Bypasses zur Druckabsenkung) des Membranventils möglich.

Durch die Erfindung ist es möglich, normalerweise offene und normalerweise geschlossene Einmalventile mit der gleichen Aufbautechnologie zu realisieren.

Die erfindungsgemäßen Ventile lassen sich vollständig mithilfe von Laserdurchstrahlschweißen und Laserstrukturierung mit wenigen Prozessschritten herstellen, wobei keine Reinraumbedingungen erforderlich sind. Die Steuerung kann komplett elektrisch erfolgen. Auf weitere externe Steuerelemente, wie z.B. Drehventile, Schrittmotoren, pneumatische Membranventile, externe Pilotventile, Wachsventile oder externe Heizelemente, wie z.B. IR- oder Laserstrahler, kann beim Gegenstand der vorliegenden Erfindung vollständig verzichtet werden. Das zum Betrieb des LoCs notwendige Laborgerät kann dadurch entscheidend vereinfacht und verbilligt werden.

Im Gegensatz zu bei bekannten Ventilen verwendeten mechanischen, thermischen oder pneumatischen Schnittstellen vereinfacht sich die Anschlusstechnik beim Gegenstand der vorliegenden Erfindung entscheidend. Insbesondere eliminiert die vorliegende Erfindung die Notwendigkeit pneumatischer Verbindungen bzw. beschränkt sie auf nur eine einzige und ersetzt sie durch elektrische Verbindungen, welche beispielsweise durch Federkontaktstifte oder Stecker einfach und platzsparend realisiert werden können. Dadurch kann das Einlegen des LoCs in das Laborgerät vereinfacht und das Laborgerät kostengünstiger ausgeführt werden.

Durch den Wegfall pneumatischer Verbindungen bis ggf. auf eine einzige kann das LoC-System kleiner ausgeführt werden, wodurch sich die Herstellungskosten verringern.

Eine für die Heizeinrichtung beispielsweise verwendete Metallisierungsebene kann weitere Funktionen übernehmen, beispielsweise die Kontaktierung elektronischer Bauelemente, wie z.B. Biosensoren.

Im Unterschied zu den komplexen Anforderungen bei der Wachsventiltechnik kann die bei der vorliegenden Erfindung verwendete Polymermembran extrem dünn ausgelegt werden, beispielsweise mit einer Dicke von nur einigen µm, da diese fest an der Grenzfläche verankert ist, so dass nur eine sehr geringe Menge der aufgeschmolzenen Polymermembran im geöffneten Kanal weitertransportiert wird. Damit ist es möglich, auf zusätzliche Sicherheitsvorkehrungen, wie z.B. einer Aufweitung des Kanals in Flussrichtung, wo sich überschüssiges Wachs ablagern kann, zu verzichten.

Aufgrund des deutlich reduzierten Volumens der Polymermembran lässt sich diese schneller aufheizen und damit schneller schalten als Wachsventile.

Im erfindungsgemäßen Schichtaufbau kann die Polymermembran zusätzlich aktive Funktionen im System erfüllen, wie beispielsweise die Funktion einer Membranpumpe.

Bevorzugte Weiterbildungen sind Gegenstand der jeweiligen Unteransprüche.

### Kurze Beschreibung der Zeichnungen

Weitere Merkmale und Vorteile der vorliegenden Erfindung werden nachfolgend anhand von Ausführungsformen unter Bezugnahme auf die Figuren erläutert.

Es zeigen:
- Fig. 1a,b: schematische Darstellungen zum Erläutern einer beispielhaften mikrofluidischen Membranventilvorrichtung und zwar Fig. 1 a in horizontalem Querschnitt und Fig. 1b in vertikalem Querschnitt entlang der Linie A-A' in Fig. 1a;
- Fig. 2: eine schematische Darstellung zum Erläutern einer weiteren beispielhaften mikrofluidischen Membranventilvorrichtung in vertikalem Querschnitt;
- Fig. 3: eine schematische Darstellung zum Erläutern einer weiteren beispielhaften mikrofluidischen Membranventilvorrichtung in vertikalem Querschnitt;
- Fig. 4: eine schematische Darstellung zum Erläutern einer weiteren beispielhaften mikrofluidischen Membranventilvorrichtung in vertikalem Querschnitt;
- Fig. 5: eine schematische Darstellung zum Erläutern einer mikrofluidischen Membranventilvorrichtung gemäß einer fünften Ausführungsform der Erfindung in vertikalem Querschnitt;
- Fig. 6a,b,c: schematische Darstellungen zum Erläutern einer mikrofluidischen Membranventilvorrichtung gemäß einer ersten Ausführungsform der Erfindung, und zwar Fig. 6a in horizontalem Querschnitt und Fig. 6b,c in vertikalem Querschnitt entlang der Linie A-A' in Fig. 6a;
- Fig. 7a,b: schematische Darstellungen zum Erläutern einer mikrofluidischen Membranventilvorrichtung gemäß einer zweiten Ausführungsform der Erfindung, und zwar Fig. 7a in horizontalem Querschnitt und Fig. 7b in vertikalem Querschnitt entlang der Linie A-A' in Fig. 7a;
- Fig. 8: eine schematische Darstellung zum Erläutern einer mikrofluidischen Membranventilvorrichtung gemäß einer dritten Ausführungsform der Erfindung in vertikalem Querschnitt;
- Fig. 9: eine schematische Darstellung zum Erläutern einer mikrofluidischen Membranventilvorrichtung gemäß einer vierten Ausführungsform der Erfindung in vertikalem Querschnitt;
- Fig. 10a,b: schematische Darstellungen zum Erläutern einer mikrofluidischen Membranventilvorrichtung gemäß einer fünften Ausführungsform der Erfindung in vertikalem Querschnitt; und
- Fig. 11a,b: schematische Darstellungen zum Erläutern einer mikrofluidischen Membranventilvorrichtung gemäß einer sechsten Ausführungsform der Erfindung in vertikalem Querschnitt.

### Ausführungsformen der Erfindung

In den Figuren bezeichnen gleiche Bezugszeichen gleiche beziehungsweise funktionsgleiche Bestandteile.

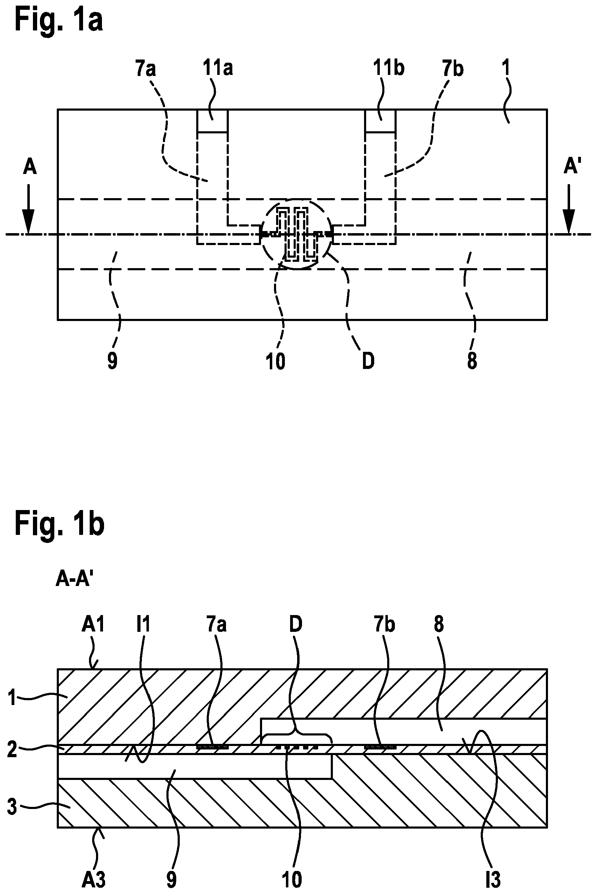

Fig. 1a,b sind schematische Darstellungen zum Erläutern einer beispielhaften mikrofluidischen Membranventilvorrichtung und zwar Fig. 1 a in horizontalem Querschnitt und Fig. 1 b in vertikalem Querschnitt entlang der Linie A-A' in Fig. 1 a.

In Fig. 1a, b bezeichnet Bezugszeichen 1 ein erstes Polymersubstrat, welches eine erste Innenseite I1 und eine erste Außenseite A1 sowie einen ersten mikrofluidischen Kanal 8 aufweist.

Bezugszeichen 3 bezeichnet ein zweites Polymersubstrat, welches eine zweite Innenseite 13, eine zweite Außenseite A3 und einen zweiten mikrofluidischen Kanal 9 aufweist. Zwischen dem ersten Polymersubstrat 1 und dem zweiten Polymersubstrat 3 ist an deren Innenseiten I1, I3 eine Polymermembran 2 angeordnet. In einem Bereich D sind der erste mikrofluidische Kanal 8 und der zweite mikrofluidische Kanal 9 nur durch die Polymermembran 3 voneinander getrennt. In der Grenzschicht zwischen der Polymermembran 2 und einem der Polymersubstrate 1, 3, hier dem Polymersubstrat 1, befindet sich eine strukturierte Metallschicht, welche im Bereich D der Polymermembran 2 derart ausgelegt ist, dass dort ein hoher elektrischer Widerstand vorliegt, z.B. durch Ausbilden einer dünnen Mäanderstruktur. Der Mäanderstrukturbereich ist über Zuleitungen 7a, 7b mit elektrischen Anschlussbereichen 11a, 11b verbunden, sodass der Mäanderbereich eine elektrische Heizeinrichtung 10 im Bereich D bildet. Durch Anlegen einer geeigneten Spannung an die elektrischen Anschlussbereiche 11a, 11b lässt sich die Heizeinrichtung 10 in Form der Mäanderstruktur derart stark erhitzen, dass die Polymermembran 2 im Bereich D zumindest teilweise schmilzt und damit die mikrofluidischen Kanäle 8, 9 miteinander verbunden sind, um einen durchgehenden Kanal zu bilden, welcher zwischen den seitlichen Enden der Kanäle 9 und 8 verläuft.

Über die angelegte Spannung bzw. den fließenden Strom lässt sich dabei entweder auch die Mäanderstruktur aufschmelzen, wodurch der gesamte Kanalquerschnitt freigegeben wird, oder es wird nur die Polymermembran 2 ganz bzw. teilweise geschmolzen und das verwendete Fluid bewegt sich durch die Zwischenräume der Heizeinrichtung 10. Je nach Anwendung ist es somit bei entsprechender Parameterauswahl möglich, dass ein Großteil der Polymerreste an der Heizeinrichtung 10 verbleibt und nicht mit dem Fluid abtransportiert wird.

Die mikrofluidischen Kanäle 8, 9 enden an den Seitenflächen des ersten bzw. zweiten Polymersubstrats 1, 3, es ist jedoch auch möglich, dass die mikrofluidischen Kanäle 8, 9 einen wesentlich komplizierteren Verlauf in den Polymersubstraten 1, 3 aufweisen.

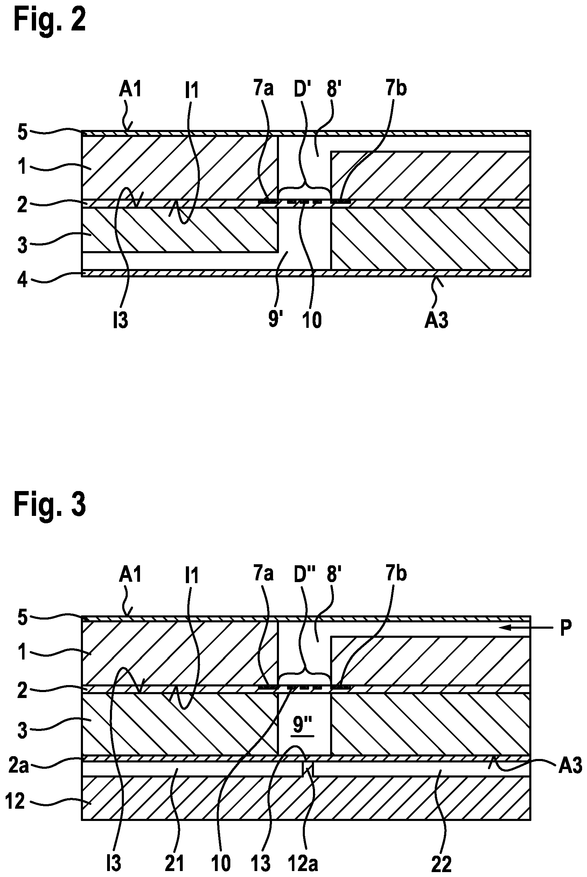

Fig. 2 ist eine schematische Darstellung zum Erläutern einer weiteren beispielhaften mikrofluidischen Membranventilvorrichtung der Erfindung in vertikalem Querschnitt.

Der erste mikrofluidische Kanal 8' verläuft der erste mikrofluidische Kanal 8' zu und auf der von der ersten Polymermembran 2 abgewandten ersten Außenseite A1 des ersten Polymersubstrats 1. Weiterhin verläuft der zweite mikrofluidische Kanal 9' zu und auf der von der ersten Polymermembran 2 abgewandten zweiten Außenseite A3 des zweiten Polymersubstrats. An der ersten Außenseite A1 wird der mikrofluidische Kanal 8' durch eine erste Klebefolie 5 gedeckelt, und an der zweiten Außenseite A3 wird der zweite mikrofluidische Kanal 9' durch eine zweite Klebefolie 4 gedeckelt. Anstelle der Klebefolien 4, 5 können auch zusätzliche Schichten aus Polymer zum Deckeln der mikrofluidischen Kanäle 8', 9' verwendet werden. Der Blockadebereich ist mit Bezugszeichen D' bezeichnet und ist wie der Blockadebereich D strukturiert.

Bei diesem Beispiel werden die Zuleitungen 7a, 7b in der Umgebung der Heizeinrichtung 10 in Form der Mäanderstruktur zusätzlich mechanisch geklemmt, was je nach verwendeter Metallisierungstechnologie vorteilhaft sein kann.

Fig. 3 ist eine schematische Darstellung zum Erläutern einer weiteren beispielhaften mikrofluidischen Membranventilvorrichtung in vertikalem Querschnitt.

Bei diesem Beispiel verläuft der erste mikrofluidische Kanal 8' ebenso wie bei der oben beschriebenen zweiten Ausführungsform. Der zweite mikrofluidische Kanal 9" führt zur zweiten Außenseite A3, wo eine zweite Polymermembran 2a vorgesehen ist, welche in Verbindung mit einem dritten Polymersubstrat 12 im Bereich des zweiten mikrofluidischen Kanals 9" auf der Außenseite A3 ein mikrofluidisches Ventil 13 bildet, welches den Durchfluss zwischen einem dritten mikrofluidischen Kanal 21 und einem vierten mikrofluidischen Kanal 22 im dritten Polymersubstrat 12 steuert.

Der Blockadebereich ist bei dieser Ausführungsform mit Bezugszeichen D" bezeichnet und ist wie der Blockadebereich D strukturiert. Bei intaktem Bereich D" öffnet sich das Membranventil 13 beispielsweise bei einem Überdruck im dritten mikrofluidischen Kanal 21, indem sich die zweite Polymermembran 2a vom Bereich 12a unter dem Einfluss des Druckes abhebt, sodass ein Durchgang zum vierten mikrofluidischen Kanal 22 geschaffen wird. Dies ist auch der Fall, wenn bei intaktem Bereich D" ein Druck P am ersten mikrofluidischen Kanal 8' anliegt. Wird jedoch der Bereich D" durch Anlegen einer Spannung durch die Heizeinrichtung 10 mit der Mäanderstruktur geschmolzen, so bewirkt der extern angelegte Druck P, dass das mikrofkuidische Ventil 13 nicht mehr geöffnet werden kann.

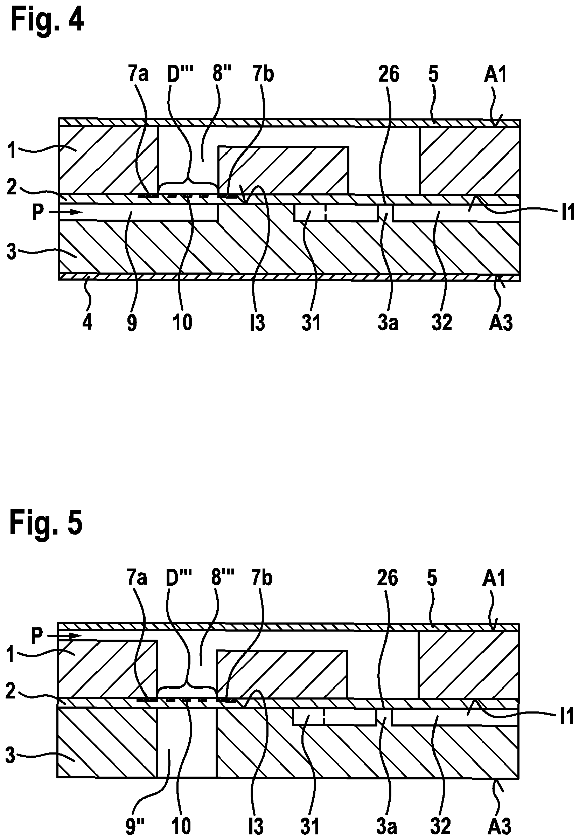

Fig. 4 ist eine schematische Darstellung zum Erläutern einer weiteren beispielhaften mikrofluidischen Membranventilvorrichtung in vertikalem Querschnitt.

Bei der vierten Ausführungsform ist die Funktionalität der oben beschriebenen dritten Beispiels ohne zusätzliche Polymermembran 2a und ohne zusätzliches Polymersubstrat 12 realisiert. Der Blockadebereich ist bei dieser Ausführungsform mit Bezugszeichen D"' bezeichnet und ist wie der Blockadebereich D strukturiert.

Der erste mikrofluidische Kanal 8" verläuft von dem Blockadebereich D"' von der ersten Innenseite I1 über die erste Außenseite A1 zu einem mikrofluidischen Ventil 26, welches auf der ersten Innenseite I1 durch die erste Polymermembran 2 und das zweite Polymersubstrat 3 gebildet ist.

Das mikrofluidische Ventil 26 steuert bei intaktem Bereich D"' den Fluss zwischen einem fünften mikrofluidischen Kanal 31, welcher senkrecht in die Bildebene gepflegt ist, und einem sechsten mikrofluidischen Kanal 32 über ein Abheben der Polymermembran 2 von dem Bereich 3a des zweiten Polymersubstrats 3. Beim Öffnen des Blockadebereichs D"' wird der extern angelegte Überdruck P über den ersten mikrofluidischen Kanal 8" zum mikrofluidischen Ventil 26 geführt, wodurch dieses nicht mehr geöffnet werden kann.

Fig. 5 ist eine schematische Darstellung zum Erläutern einer weiteren beispielhaften mikrofluidischen Membranventilvorrichtung in vertikalem Querschnitt.

Bei diesem Beispiel ist die Funktionalität derart gewählt, dass das mikrofluidische Ventil 26 zunächst geschlossen ist. Hierzu lässt sich an dem ersten mikrofluidischen Kanal 8"' ein externer Druck P anlegen. Durch das Öffnen des Blockadebereichs D"' über die Heizeinrichtung 10 wird der Überdruck im ersten mikrofluidischen Kanal 8"' in den zweiten mikrofluidischen Kanal 9" geleitet, welcher zur zweiten Außenseite A3 führt. Somit kann das mikrofluidische Ventil 26 wieder durch einen geeigneten Druck im fünften mikrofluidischen Kanal 31 geöffnet werden, wie bereits oben beschrieben.

Die mikrofluidischen Kanäle 8"', 9" sollten dabei derart dimensioniert werden, dass ein Nachströmen des Mediums zur Erzeugung des Drucks P über den Kanal 8" zu keiner Druckerhöhung am Membranventil 26 führt.

Prinzipiell ist es möglich, durch Kombinieren der vierten und fünften Beispiels und eine geeignete Anordnung eines zusätzlichen Einmalventils mit Bypass ein ursprünglich offenes Membranventil zu schließen und wieder zu öffnen, sodass die beiden Ausführungsformen auch dazu genutzt werden können, mehrere Schaltvorgänge an einem einzelnen Membranventil durchzuführen.

Durch diese Möglichkeit der Herstellung beliebiger Kanalverläufe in den Polymersubstraten, beispielsweise durch Fräsen, Spritzguss, Heißprägen oder Laserstrukturierung, können beliebig komplexe Systeme hergestellt werden. Das Fügen des polymeren Schichtaufbaus kann beispielsweise mit Laserdurchstrahlschweißen, Ultraschallschweißen oder Klebetechniken erfolgen. Die Metallisierung zur Herstellung der Heizeinrichtung 10 und deren Zuleitungen 7a, 7b bzw. Anschlussbereichen 11a, 11b kann beispielsweise durch Sputtern, Inkjet-Printing oder Galvanikprozesse erfolgen, insbesondere auch mithilfe von Laserdurchstrahlschweißen und Laserstrukturierung.

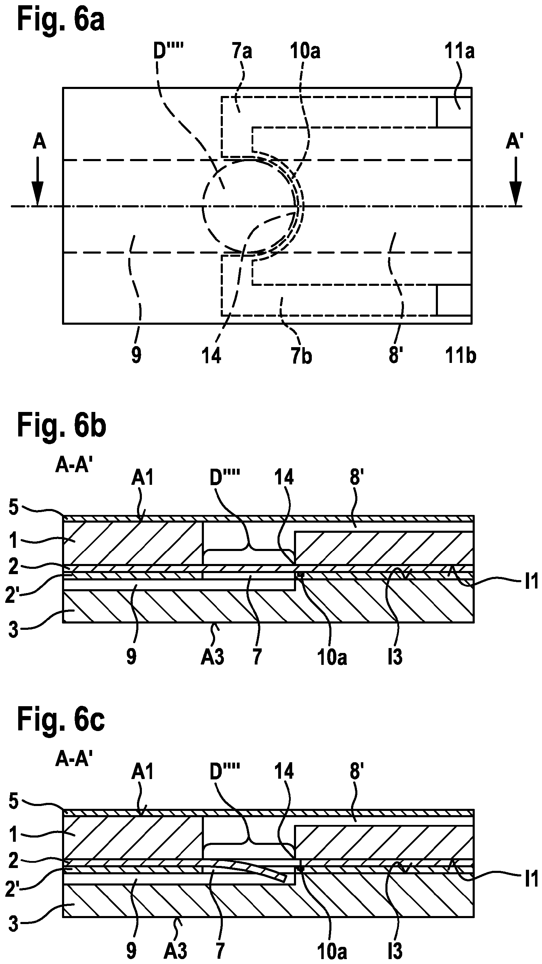

Fig. 6a,b,c sind schematische Darstellungen zum Erläutern einer mikrofluidischen Membranventilvorrichtung gemäß einer ersten Ausführungsform der Erfindung, und zwar Fig. 6a in horizontalem Querschnitt und Fig. 6b,c in vertikalem Querschnitt entlang der Linie A-A' in Fig. 6a.

Bei der ersten Ausführungsform ist zwischen der ersten Innenseite I1 und der zweiten Innenseite I3 eine zweite Polymermembran 2' unterhalb der ersten Polymermembran 2 angeordnet, welche im Blockadebereich D"" ein Durchgangsloch 7 aufweist. Dies hat den Vorteil, dass zunächst der Schichtaufbau bestehend aus dem zweiten Polymersubstrat 3 mit dem zweiten mikrofluidischen Kanal 9, der Polymermembran 2' mit dem Durchgangsloch 7 und der Metallschicht zur Ausbildung der Heizeinrichtung, welche hier Bezugszeichen 10a trägt, hergestellt werden kann. Danach kann die Polymermembran 2 zusammen mit dem ersten Polymersubstrat 1 mit dem ersten mikrofluidischen Kanal 8' aufgebracht werden und bei diesem Beispiel mit der Klebefolie 5 gedeckelt werden. Auf diese Art und Weise wird eine Verbindung und Strukturierung der Metallschicht auf dem Bereich D"" der ersten Polymermembran 2 vermieden.

Insbesondere ist bei dieser Ausführungsform die Heizeinrichtung entlang der Kante 14 des Bereichs D"" auf der zweiten Polymermembran 2' vorgesehen. Gegebenenfalls kann sie auch nur an einem Teilbereich der Kante 14 vorgesehen werden. Durch Anlegen einer Spannung an den Anschlussbereichen 11a, 11b wird die Heizeinrichtung 10a soweit aufgeheizt, dass die Temperatur der Polymermembran 2 entlang der Kante 14 über die Erweichungstemperatur erhöht wird. Ein beispielsweise über den ersten mikrofluidischen Kanal 8' oder einen zweiten mikrofluidischen Kanal 9 zugeführter Überdruck führt daraufhin zum Reißen der Membran 2 im Bereich D"" und zum Öffnen des Ventils, wie in Fig. 6c dargestellt.

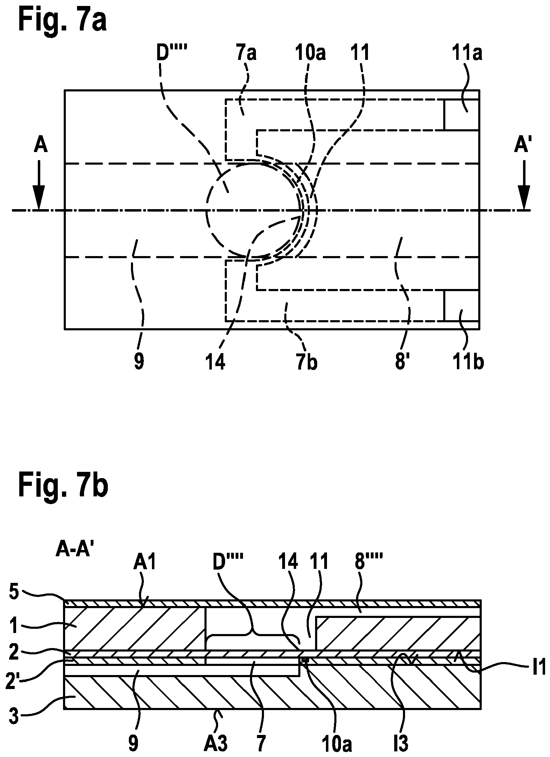

Fig. 7a,b sind schematische Darstellungen zum Erläutern einer mikrofluidischen Membranventilvorrichtung gemäß einer zweiten Ausführungsform der Erfindung, und zwar Fig. 7a in horizontalem Querschnitt und Fig. 7b in vertikalem Querschnitt entlang der Linie A-A' in Fig. 7a.

Bei der zweiten Ausführungsform ist im ersten mikrofluidischen Kanal 8"" eine Aussparung 11 über der Heizeinrichtung 10a mit der hochohmigen Struktur vorgesehen. Dies hat den Vorteil, dass die Wärmeleitung des ersten Polymersubstrats 1 über der Heizeinrichtung 10a deutlich verringert wird. Dadurch sinkt die benötigte elektrische Energie zum Erreichen der Zieltemperatur in der ersten Polymermembran 2. Das Ventil kann somit zuverlässiger aktuiert werden, da nicht die Gefahr besteht, dass es beim Aufheizvorgang die Polymermembran 2 im Bereich der Kante 14 mit dem ersten Polymersubstrat 1 verbindet.

Ansonsten ist die zweite Ausführungsform gleich wie die erste Ausführungsform aufgebaut.

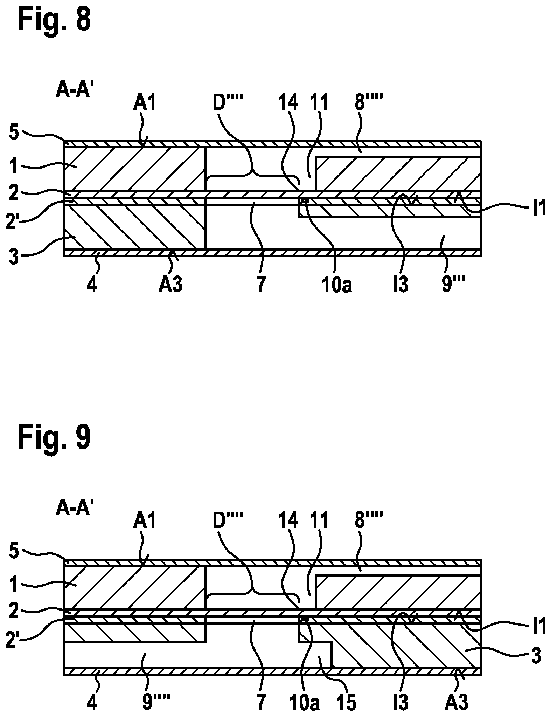

Fig. 8 ist eine schematische Darstellung zum Erläutern einer mikrofluidischen Membranventilvorrichtung gemäß einer dritte Ausführungsform der Erfindung in vertikalem Querschnitt.

Bei der dritten Ausführungsform verläuft der zweite mikrofluidische Kanal 9"' zur zweiten Außenseite A3 und wird dort von der zweiten Klebefolie 4 gedeckelt. Diese Ausführungsform hat insbesondere den Vorteil, dass die beim Öffnen des Bereichs D"" entstehende Zunge durch ein Aufliegen auf der Unterseite des Kanals 9 nicht zu einem erneuten Verschließen des derart geöffneten durchgehenden Kanals führen kann.

Fig. 9 ist eine schematische Darstellung zum Erläutern einer mikrofluidischen Membranventilvorrichtung gemäß einer vierten Ausführungsform der Erfindung in vertikalem Querschnitt.

Bei der vierten Ausführungsform ist der erste mikrofluidische Kanal 8"" wie bei der siebten Ausführungsform gestaltet, allerdings enthält der zweite mikrofluidische Kanal 9"" eine zusätzliche Aussparung 15 im zweiten Polymersubstrat 3, welche unterhalb der Heizeinrichtung 10a um das Durchloch 7 herumgeführt wird. Auch diese Aussparung 15 trägt dazu bei, ein erneutes Verschließen des Kanals zu verhindern, nachdem das Aufschmelzen erfolgt ist. Im Gegensatz zur achten Ausführungsform kann die Richtung des Kanals 9"" beliebig innerhalb des Polymersubstrats 3 gewählt werden.

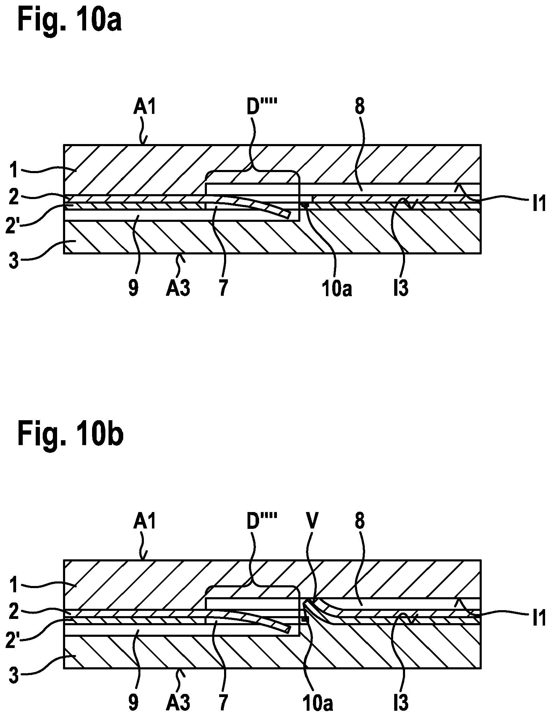

Fig. 10a,b sind schematische Darstellungen zum Erläutern einer mikrofluidischen Membranventilvorrichtung gemäß einer fünften Ausführungsform der Erfindung in vertikalem Querschnitt.

Bei der fünften Ausführungsform sind der erste mikrofluidische Kanal 8 und der zweite mikrofluidische Kanal 9 entlang des Stapels aus den Polymermembranen 2, 2' geführt, wobei die Heizeinrichtung 10a derart gestaltet ist, wie bereits ausführlich mit Bezug auf die erste Ausführungsform beschrieben.

Fig. 10a zeigt den Zustand nach dem Öffnen des Bereichs D"". Das Öffnen erfolgt in diesem Fall durch einen kurzen elektrischen Energieeintrag, ohne die Heizeinrichtung 10a zu durchschmelzen, wodurch die Heizeinrichtung 10a nach dem Öffnen des Bereichs D"" noch voll funktionsfähig bleibt.

Wie in Fig. 10b illustriert, kann das Ventil bei Bedarf in einem darauffolgenden Schritt wieder verschlossen werden. Dazu wird der elektrische Energieeintrag von der Heizeinrichtung 10a längere Zeit aufrechterhalten, wodurch sich der gesamte Bereich um die Heizeinrichtung 10a herum erhitzt und durch thermische Ausdehnung der Polymerschichten, Verflüssigung oder auch einer teilweisen Pyrolyse ein Verschluss V des ersten mikrofluidischen Kanals 8 gebildet wird. Das Ventil ist damit irreversibel verschlossen.

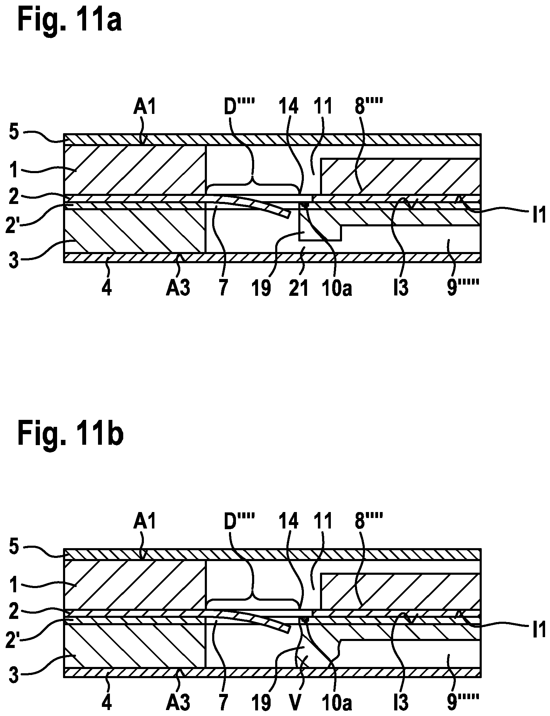

Fig. 11a,b sind schematische Darstellungen zum Erläutern einer mikrofluidischen Membranventilvorrichtung gemäß einer sechsten Ausführungsform der Erfindung in vertikalem Querschnitt.

Bei der sechsten Ausführungsform ist der erste mikrofluidische Kanal 8"" wie bei der achten Ausführungsform ausgebildet. Der zweite mikrofluidische Kanal 9"" enthält im Unterschied zum zweiten mikrofluidischen Kanal 9"' der achten Ausführungsform eine Verengung 21 unterhalb der Heizeinrichtung 10a, welche durch einen entsprechenden Bereich 19 des zweiten Polymersubstrats 3 gebildet ist. Fig. 11a zeigt den Zustand nach Öffnen des Bereichs D"".

Analog zur oben beschriebenen fünften Ausführungsform kann ein Verschließen des zweiten mikrofluidischen Kanals 9"" dadurch erreicht werden, dass ein längerer Energieeintrag über die Heizeinrichtung 10a führt, sodass der Bereich 19 erhitzt wird und durch thermische Ausdehnung oder Verflüssigung schließlich die Verengung 21 schließt und einen Verschluss V bildet.

Die Möglichkeit, den geöffneten Kanal wieder zu verschließen, führt zu deutlich größeren Einsatzmöglichkeiten zur Umsetzung von mikrofluidischen Systemen. Zum Öffnen und Schließen des Ventils wird dieselbe Heizeinrichtung, also derselbe Metallisierungsbereich verwendet, wobei die jeweilige Funktion über die Menge des Energieeintrags geregelt wird. Es sind also keine zusätzlichen Kontaktstellen bzw. Funktionselemente notwendig.

Obwohl die vorliegende Erfindung anhand mehrerer Ausführungsbeispiele beschrieben worden ist, welche beliebig miteinander kombiniert werden können, ist sie darauf nicht beschränkt, sondern vielfältig weitermodifizierbar.

Insbesondere sind die Strukturen der obigen Ausführungsbeispiele beliebig kombinierbar, um komplexe Systeme zu schaffen.

Als Materialien für das Polymersubstrat eignen sich beispielsweise Thermoplaste, wie z.B. PC, PP, PE, PMMA, COP, COC usw. Die elastische Polymermembran lässt sich beispielsweise aus einem Elastomer, einem thermoplastischen Elastomer oder aus Thermoplasten bilden. Als Metallisierung eignen sich viele in der Mikrosystemtechnik übliche Metalle, insbesondere Kupfer. Beispielhafte Abmessungen für die hier beschriebenen Ausführungsbeispiele sind eine Dicke des Polymersubstrats von 0,5 bis 5 mm, eine Dicke der Polymermembran von 5 bis 300 µm, eine Dicke der Metallschicht von 0,1 bis 20 µm sowie Volumina der Kavitäten von 1 bis 1000 µm3. Die lateralen Abmessungen der Ausführungsbeispiele liegen typischerweise bei 10 x 10 bis 100 x 100 mm2. Ein Durchmesser der Ventilkavität liegt beispielsweise zwischen 0,1 und 5 mm, und die Leiterbahnbreite der hochohmigen Struktur zwischen 1 µm und 1 mm. Auch diese beispielhaft erwähnten Materialien und Dimensionierungen sind allerdings nicht auf die angeführten Beispiele beschränkt.

## Patentansprüche

1. Mikrofluidische Membranventilvorrichtung mit:
einem ersten Polymersubstrat (1) mit einem ersten mikrofluidischen Kanal (8; 8'; 8"");
einem zweiten Polymersubstrat (3) mit einem zweiten mikrofluidischen Kanal (9;9"';9""; 9""');
einer zwischen einer ersten Innenseite (11) des ersten Polymersubstrats (1) und einer zweiten Innenseite (13) des zweiten Polymersubstrats (3) angeordneten ersten Polymermembran (2), wobei der erste mikrofluidische Kanal (8; 8'; 8"") und zweite mikrofluidische Kanal (9; 9"'; 9""; 9""') durch einen Bereich (D"") der ersten Polymermembran (2) voneinander getrennt sind; und
einer mit dem Bereich (D"") der ersten Polymermembran (2) in thermischen Kontakt befindlichen Heizeinrichtung (10a), wodurch der Bereich (D"") zumindest teilweise aufschmelzbar ist;
**dadurch gekennzeichnet, dass**
zwischen der ersten Innenseite (11) des ersten Polymersubstrats (1) und der zweiten Innenseite (13) des zweiten Polymersubstrats (3) eine zweite Polymermembran (2') unterhalb der ersten Polymermembran (2) angeordnet ist, welche im Bereich (D"") ein Durchgangsloch (7) aufweist;
die Heizeinrichtung (10a) zumindest teilweise entlang einer Kante (14) des Bereichs (D"") verläuft; und
die Heizeinrichtung (10a) auf der zweiten Polymermembran (2') vorgesehen ist.

2. Mikrofluidische Membranventilvorrichtung nach Anspruch 1, wobei der erste mikrofluidische Kanal (8; 8'; 8"") zu und auf einer von der ersten Polymermembran (2) abgewandten ersten Außenseite (A1) des ersten Polymersubstrats (1) und der zwei te mikrofluidische Kanal (9'; 9"'; 9""; 9""') zu und auf einer von der ersten Polymermembran (2) abgewandten zweiten Außenseite (A3) des zweiten Polymersubstrats (3) verlaufen.

3. Mikrofluidische Membranventilvorrichtung nach Anspruch 2, wobei der erste mikrofluidische Kanal (8'; 8"") auf der ersten Außenseite (A1) des ersten Polymersubstrats (1) und/oder der zweite mikrofluidische Kanal (9"; 9""; 9"") auf der zweiten Außenseite (A3) des zweiten Polymersubstrats (3) durch eine Folie (4; 5) gedeckelt sind.

4. Mikrofluidische Membranventilvorrichtung nach Anspruch 1, wobei oberhalb der Heizeinrichtung (10a) eine Aussparung (11) im ersten Polymersubstrat (1) gebildet ist.

5. Mikrofluidische Membranventilvorrichtung nach Anspruch 1 oder 4, wobei unterhalb der Heizeinrichtung (10a) eine Aussparung (15) im zweiten Polymersubstrat (3) gebildet ist.

6. Mikrofluidische Membranventilvorrichtung nach Anspruch 1, wobei der erste mikrofluidische Kanal (8) oder zweite mikrofluidische Kanal (9""') durch die Heizeinrichtung (10a) bei zumindest teilweise aufgeschmolzener erster Polymermembran (2) wieder verschließbar ist.

7. Mikrofluidische Membranventilvorrichtung nach Anspruch 6, wobei der erste erste mikrofluidische Kanal (8) und/ oder zweite mikrofluidische Kanal (9""') im Bereich der Heizeinrichtung (10a) eine Verengung (21) aufweisen.

8. Verfahren zum Herstellen einer mikrofluidischen Membranventilvorrichtung mit den Schritten:
Bilden eines ersten Polymersubstrats (1) mit einem ersten mikrofluidischen Kanal (8; 8'; 8"");
Bilden eines zweiten Polymersubstrats (3) mit einem zweiten mikrofluidischen Kanal (9; 9"'; 9""; 9""');
Bilden einer ersten Polymermembran (2) auf einer ersten Innenseite (I1) des ersten Polymersubstrats (1), welche einen Bereich (D"") aufweist, der den ersten mikrofluidischen Kanal (8; 8'; 8"") überspannt;
Bilden einer zweiten Polymermembran (2') auf einer zweiten Innenseite (I3) des zweiten Polymersubstrats (3), welche im Bereich (D"") ein Durchgangsloch (7) aufweist;
Bilden einer Heizeinrichtung (10a) zumindest teilweise entlang einer Kante (14) des Bereichs (D"") auf der zweiten Polymermembran (2');
Zusammenfügen der ersten Polymermembran (2) zusammen mit dem ersten Polymersubstrat (1) und der zweiten Polymermembran (2') zusammen mit dem zweiten Polymersubstrat (3) und der auf der zweiten Polymermembran (2') gebildeten Heizeinrichtung (10a) derart, dass der erste mikrofluidische Kanal (8; 8'; 8"") und zweite mikrofluidische Kanal (9; 9"'; 9""; 9""') durch den Bereich (D"") der ersten Polymermembran (2) voneinander getrennt sind;
wodurch sich die Heizeinrichtung (10a) mit dem Bereich (D"") der ersten Polymermembran (2) in thermischem Kontakt befindet, so dass der Bereich (D"") zumindest teilweise durch die Heizeinrichtung (10a) aufschmelzbar ist.

## Claims

1. Microfluidic membrane-valve device with
a first polymer substrate (1) with a first microfluidic channel (8; 8'; 8""),
a second polymer substrate (3) with a second microfluidic channel (9; 9"'; 9""; 9""'),
a first polymer membrane (2), arranged between a first inner side (11) of the first polymer substrate (1) and a second inner side (13) of the second polymer substrate (3), the first microfluidic channel (8; 8'; 8"") and the second microfluidic channel (9; 9"'; 9""; 9""') being separated from one another by a region (D"") of the first polymer membrane (2), and
a heating device (10a), which is in thermal contact with the region (D"") of the first polymer membrane (2) and whereby the region (D"") can be at least partially melted,
**characterized in that**
between the first inner side (11) of the first polymer substrate (1) and the second inner side (13) of the second polymer substrate (3), a second polymer membrane (2'), which has a through-hole (7) in the region (D""), is arranged underneath the first polymer membrane (2);
the heating device (10a) runs at least partially along an edge (14) of the region (D""); and
the heating device (10a) is provided on the second polymer membrane (2').

2. Microfluidic membrane-valve device according to Claim 1, the first microfluidic channel (8; 8'; 8"") running to and on an outer side (A1) of the first polymer substrate (1) that is facing away from the first polymer membrane (2) and the second microfluidic channel (9; 9"'; 9""; 9""') running to and on a second outer side (A3) of the second polymer substrate (3) that is facing away from the first polymer membrane (2).

3. Microfluidic membrane-valve device according to Claim 2, the first microfluidic channel (8'; 8"") on the first outer side (A1) of the first polymer substrate (1) and/or the second microfluidic channel (9"; 9""; 9"") on the second outer side (A3) of the second polymer substrate (3) being capped by a film (4; 5).

4. Microfluidic membrane-valve device according to Claim 1, a clearance (11) being formed in the first polymer substrate (1) above the heating device (10a).

5. Microfluidic membrane-valve device according to Claim 1 or 4, a clearance (15) being formed in the second polymer substrate (3) under the heating device (10a).

6. Microfluidic membrane-valve device according to Claim 1, the first microfluidic channel (8) or the second microfluidic channel (9""') being reclosable by the heating device (10a) when the first polymer membrane (2) is at least partially melted.

7. Microfluidic membrane-valve device according to Claim 6, the first first microfluidic channel (8) and/or second microfluidic channel (9""') having a constriction (21) in the region of the heating device (10a).

8. Method for producing a microfluidic membrane-valve device with the steps of:
forming a first polymer substrate (1) with a first microfluidic channel (8; 8'; 8"");
forming a second polymer substrate (3) with a second microfluidic channel (9; 9"'; 9""; 9""');
forming a first polymer membrane (2) on a first inner side (I1) of the first polymer substrate (1), which has a region (D"") that extends over the first microfluidic channel (8; 8'; 8"");
forming a second polymer membrane (2') on a second inner side (13) of the second polymer substrate (3), which has a through-hole (7) in the region (D"");
forming a heating device (10a) at least partially along an edge (14) of the region (D"") on the second polymer membrane (2');
joining together the first polymer membrane (2) together with the first polymer substrate (1) and the second polymer membrane (2') together with the second polymer substrate (3) and the heating device (10a) formed on the second polymer membrane (2') in such a way that the first microfluidic channel (8; 8'; 8"") and the second microfluidic channel (9; 9"'; 9""; 9""') are separated from one another by the region (D"") of the first polymer membrane (2) ;
whereby the heating device (10a) is in thermal contact with the region (D"") of the first polymer membrane (2), so that the region (D"") can be at least partially melted by the heating device (10a).

## Revendications

1. Arrangement de soupape à membrane microfluidique, comprenant :
un premier substrat en polymère (1) pourvu d'un premier canal microfluidique (8 ; 8' ; 8"") ;
un deuxième substrat en polymère (3) pourvu d'un deuxième canal microfluidique (9 ; 9"' ; 9"" ; 9""') ;
une première membrane en polymère (2) disposée entre un premier côté intérieur (11) du premier substrat en polymère (1) et un deuxième côté intérieur (13) du deuxième substrat en polymère (3), le premier canal microfluidique (8 ; 8' ; 8"") et le deuxième canal microfluidique (9 ; 9"' ; 9"" ; 9""') étant séparés l'un de l'autre par une zone (D"") de la première membrane en polymère (2) ; et
un dispositif chauffant (10a) qui se trouve en contact thermique avec la zone (D"") de la première membrane en polymère (2), la zone (D"") pouvant au moins partiellement être fondue ;
**caractérisé en ce que**
une deuxième membrane en polymère (2') est disposée au-dessous de la première membrane en polymère (2) entre le premier côté intérieur (11) du premier substrat en polymère (1) et le deuxième côté intérieur (13) du deuxième substrat en polymère (3), laquelle possède un trou traversant dans la zone (D"") ;
le dispositif chauffant (10a) s'étend au moins partiellement le long d'un bord (14) de la zone (D"") ; et
le dispositif chauffant (10a) est disposé sur la deuxième membrane en polymère (2').

2. Arrangement de soupape à membrane microfluidique selon la revendication 1, le premier canal microfluidique (8 ; 8' ; 8"") s'étendant vers et sur un premier côté extérieur (A1) du premier substrat en polymère (1) qui se trouve à l'opposé de la première membrane en polymère (2) et le deuxième canal microfluidique (9 ; 9"' ; 9"" ; 9""') vers et sur un deuxième côté extérieur (A3) du deuxième substrat en polymère (3) qui se trouve à l'opposé de la première membrane en polymère (2).

3. Arrangement de soupape à membrane microfluidique selon la revendication 2, le premier canal microfluidique (8' ; 8"") sur le premier côté extérieur (A1) du premier substrat en polymère (1) et/ou le deuxième canal microfluidique (9" ; 9"" ; 9""') sur le deuxième côté extérieur (A3) du deuxième substrat en polymère (3) étant recouverts par un film (4 ; 5).

4. Arrangement de soupape à membrane microfluidique selon la revendication 1, une cavité (11) étant formée dans le premier substrat en polymère (1) au-dessus du dispositif chauffant (10a).

5. Arrangement de soupape à membrane microfluidique selon la revendication 1 ou 4, une cavité (15) étant formée dans le deuxième substrat en polymère (3) au-dessous du dispositif chauffant (10a).

6. Arrangement de soupape à membrane microfluidique selon la revendication 1, le premier canal microfluidique (8) ou le deuxième canal microfluidique (9"") pouvant de nouveau être fermés par le dispositif chauffant (10a) lorsque la première membrane en polymère (2) est au moins partiellement fondue.

7. Arrangement de soupape à membrane microfluidique selon la revendication 6, le premier premier canal microfluidique (8) et/ou le deuxième canal microfluidique (9""') possédant un rétrécissement (21) dans la zone du dispositif chauffant (10a).

8. Procédé de fabrication d'un arrangement de soupape à membrane microfluidique, comprenant les étapes suivantes :
formation d'un premier substrat en polymère (1) pourvu d'un premier canal microfluidique (8 ; 8' ; 8'''') ;
formation d'un deuxième substrat en polymère (3) pourvu d'un deuxième canal microfluidique (9 ; 9' ; 9'''') ;
formation d'une première membrane en polymère (2) sur un premier côté intérieur (11) du premier substrat en polymère (1), laquelle possède une zone (D"") qui enjambe le premier canal microfluidique (8 ; 8' ; 8"") ;
formation d'une deuxième membrane en polymère (2') sur un deuxième côté intérieur (13) du deuxième substrat en polymère (3), laquelle possède un trou traversant dans la zone (D"") ;
formation d'un dispositif chauffant (10a) au moins partiellement le long d'un bord (14) de la zone (D"") sur la deuxième membrane en polymère (2') ;
assemblage de la première membrane en polymère (2) avec le premier substrat en polymère (1) et de la deuxième membrane en polymère (2') avec le deuxième substrat en polymère (3) ainsi que du dispositif chauffant (10a) de telle sorte que le premier canal microfluidique (8 ; 8' ; 8"") et le deuxième canal microfluidique (9 ; 9' ; 9'''') soient séparés l'un de l'autre par la zone (D"") de la première membrane en polymère (2) ;
le dispositif chauffant (10a) se trouvant ainsi en contact thermique avec la zone (D'''') de la première membrane en polymère (2) de telle sorte que la zone (D"") peut au moins partiellement être fondue par le dispositif chauffant (10a).
